# EUROPEAN PATENT APPLICATION

(11) **EP 1 909 411 A1**
(43) Date of publication of application: **09.04.2008**
(21) Application number: 06781342.8
(22) Date of filing: 20.07.2006
(51) Int. Cl.: H04B 7/26, H04Q 7/38

(54) **MULTIMEDIA CONTENT PROVIDING METHOD AND MOBILE STATION**

(30) Priority: 20.07.2005 JP 2005210193
(71) Applicant: NTT DoCoMo Inc., Chiyoda-ku Tokyo 100-6150 (JP)
(72) Inventor: MOON, Sung, Uk, NTT DoCoMo, Inc.,, 11-1,Nagatacho 2-chome,Chiyoda-ku, Tokyo 100-6150 (JP); ISHII, Minami, NTT DoCoMo, Inc.,, 11-1,Nagatacho 2-chome,Chiyoda-ku, Tokyo 100-6150 (JP); NAKAMURA, Takehiro, NTT DoCoMo, Inc.,, 11-1,Nagatacho 2-chome,Chiyoda-ku, Tokyo 100-6150 (JP)
(74) Representative: HOFFMANN EITLE
(86) International application number: PCT/JP2006/314382
(87) International publication number: WO 2007/010983

(57) **Abstract**

The present invention effectively controls a reception of a multimedia content from a MBMS bearer service based on a priority level associated with each of the MBMS bearer service which transmits a plurality of the multimedia contents. A multimedia content providing method according to the present invention provides a multimedia content to a plurality of mobile stations by a broadcast communication or a multicast communication, and includes the steps of: suspending, at the mobile station, a reception of a multimedia content from a low priority bearer service having a lower priority level than a desired bearer service, when a reception of a multimedia content from the desired bearer service is started while a multimedia content from a maximum receivable number of a bearer service or a multimedia content from a predetermined number of a bearer service is being received; and restarting, at the mobile station, the suspended reception of the multimedia content from the low priority bearer service, after the reception of the multimedia content from the desired bearer service is completed.

## Description

### Technical Field

The present invention relates to a multimedia content providing method and a mobile station which provide a multimedia content to a plurality of mobile stations by a broadcast communication or a multicast communication.

### Background Art

Multimedia Broadcast Multicast Service (MBMS) is a conventionally known service for providing a multimedia content to a plurality of mobile stations by a broadcast communication or a multicast communication (see, for example, Non-patent literature).

Conventional MBMS is configured so that "service announcement processing" and "MBMS notification processing" are performed to the mobile station, via a server, a core network apparatus, and a controller.

Further, the conventional MBMS is configured so that a multimedia content is simultaneously transmitted by a plurality of MBMS bearer services in some areas.

However, there has been problems in the conventional MBMS as follows; when a reception of a multimedia content from an MBMS bearer service, which exceeds a maximum receivable number or a predetermined number, is newly to be started or simultaneously started at a mobile station while a multimedia content from the predetermined number of the MBMS bearer service is being received, the mobile station cannot receive a multimedia content from an MBMS bearer service having a high priority level, because the mobile station starts receptions of the multimedia content by an order of the arrival at the mobile station, or the mobile station delays in the reception start of the multimedia content from the MBMS bearer service having the high priority level, because a multimedia content from an MBMS bearer service having a low priority level can be received before the multimedia content from the MBMS bearer service having the high priority level is received.
Non-patent literature: 3GPP TSG-SA TS23.246 v6.4.0, 2004 September

### DISCLOSURE OF THE INVENTION

The present invention has been made in view of the forgoing, and has an object of providing a multimedia content providing method and a mobile station that can solve the above-described problem by effectively controlling the reception of the multimedia content from the MBMS bearer service, based on a priority level associated with each of the MBMS bearer service which transmits a plurality of the multimedia contents.

A first aspect of the present invention is summarized as a multimedia content providing method for providing a multimedia content to a plurality of mobile stations by a broadcast communication or a multicast communication, including the steps of: suspending, at the mobile station, a reception of a multimedia content from a low priority bearer service having a lower priority level than a desired bearer service, when a reception of a multimedia content from the desired bearer service is started while a multimedia content from a maximum receivable number of a bearer service or a multimedia content from a predetermined number of a bearer service is being received; and restarting, at the mobile station, the suspended reception of the multimedia content from the low priority bearer service, after the reception of the multimedia content from the desired bearer service is completed.

In the first aspect of the present invention, the mobile station may further include the steps of: performing a joining processing to the low priority bearer service in order to receive the multimedia content from the low priority bearer service; establishing a radio bearer for the low priority bearer service to which the mobile station has performed the joining processing; and receiving the multimedia content from the low priority bearer service to which the mobile station has performed the joining processing, via the radio bearer; and in the suspending step of the reception, the mobile station may suspend the reception of the multimedia content from the low priority bearer service, by performing a leaving processing from the low priority bearer service after releasing the radio bearer for the low priority bearer service; and in the restarting step of the reception, the mobile station may restart the suspended reception of the multimedia content from the low priority bearer service, by establishing the radio bearer for the low priority bearer service after performing the joining processing to the low priority bearer service.

A second aspect of the present invention is summarized as a multimedia content providing method for providing a multimedia content to a plurality of mobile stations by a broadcast communication or a multicast communication, including the steps of: starting, at the mobile station, only a reception of a multimedia content from a determined bearer service, which Is determined based on a priority level associated with each of a plurality of bearer services, when a reception start of a multimedia content from the plurality of the bearer services makes the number of bearer services, from which the mobile station receives the multimedia content, to exceed a maximum receivable number or a predetermined number; and starting, at the mobile station, a reception of a multimedia content from a bearer service whose reception has not been started, after the reception of the multimedia content from the determined bearer service is completed.

In the second aspect of the present invention, in the starting step of only the reception of the multimedia content from the determined bearer service, the mobile station may only start the reception of the multimedia content from the determined bearer service via a radio bearer, by establishing the radio bearer for the determined bearer service to which the mobile station has performed a joining processing, after performing the joining processing to the determined bearer service in order to receive the multimedia content from the determined bearer service; and in the starting step of the reception of the multimedia content from the bearer service whose reception has not been started, the mobile station may start the reception of the multimedia content from the bearer service whose reception has not been started, by performing the joining processing to the bearer service whose reception has not been started and by establishing the radio bearer for the bearer service whose reception has not been started, after releasing the radio bearer for the determined bearer service and after performing a leaving processing from the determined bearer service.

A third aspect of the present invention is summarized as a mobile station for receiving a multimedia content provided by a broadcast communication or a multicast communication, including: a suspending unit configured to determine a reception suspension of a multimedia content from a low priority bearer service having a lower priority level than a desired bearer service, when a reception of a multimedia content from the desired bearer service is started while a multimedia content from a maximum receivable number of a bearer service or a multimedia content from a predetermined number of a bearer service is being received; and a restarting unit configured to determine a reception restart of the multimedia content from the low priority bearer service, after the reception of the multimedia content from the desired bearer service is completed.

In the third aspect of the present invention, the mobile station may further include: a reception unit configured to perform a joining processing to the low priority bearer service in order to receive the multimedia content from the low priority bearer service, to establish a radio bearer for the low priority bearer service to which the mobile station has performed the joining processing, and to receive, via the radio bearer, the multimedia content from the low priority bearer service to which the mobile station has performed the joining processing; wherein the suspending unit may be configured to determine the reception suspension of the multimedia content from the low priority bearer service by performing a leaving processing from the low priority bearer service after releasing the radio bearer for the low priority bearer service; and the restarting unit may be configured to determine the reception restart of the multimedia content from the low priority bearer service by establishing the radio bearer for the low priority bearer service after performing the joining processing to the low priority bearer service.

A fourth aspect of the present invention is summarized as a mobile station for receiving a multimedia content provided by a broadcast communication or a multicast communication, including: a starting unit configured to determine a reception start of a multimedia content from a determined bearer service, which is determined based on a priority level associated with each of a plurality of bearer services, when a reception start of a multimedia content from the plurality of the bearer services makes the number of bearer services, from which the mobile station receives the multimedia content, to exceed a maximum receivable number or a predetermined number; and a restarting unit configured to determine a reception start of a multimedia content from a bearer service whose reception has not been started, after the reception of the multimedia content from the determined bearer service is completed.

In the fourth aspect of the present invention, the starting unit may be configured to only start the reception of the multimedia content from the determined bearer service via a radio bearer, by establishing the radio bearer for the determined bearer service after performing a joining processing to the determined bearer service in order to receive the multimedia content from the determined bearer service; and the restarting unit may be configured to determine the reception start of the multimedia content from the bearer service whose reception has not been started, by performing the joining processing to the bearer service whose reception has not been started, and by establishing the radio bearer for the bearer service whose reception has not been started, after releasing the radio bearer for the determined bearer service and performing a leaving processing from the determined bearer service.

### BRIEF DESCRIPTION OF THE DRAWINGS

FIG. 1 is a diagram showing an overall configuration of a mobile communication system according to a first embodiment of the present invention;
FIG. 2 is a functional block diagram of a mobile station of the mobile communication system according to the first embodiment of the present invention;
FIG. 3 is a diagram showing an example of priority level controlled by the mobile station of the mobile communication system according to the first embodiment of the present invention;
FIG. 4 is a flowchart showing operations of the mobile communication system according to the first embodiment of the present invention; and
FIG. 5 is a flowchart showing a joining processing in the mobile communication system according to the first embodiment of the present Invention.

### DETAILED DESCRIPTION OF EMBODIMENTS

### (Configuration of Mobile Communication System according to the First Embodiment of the Present invention)

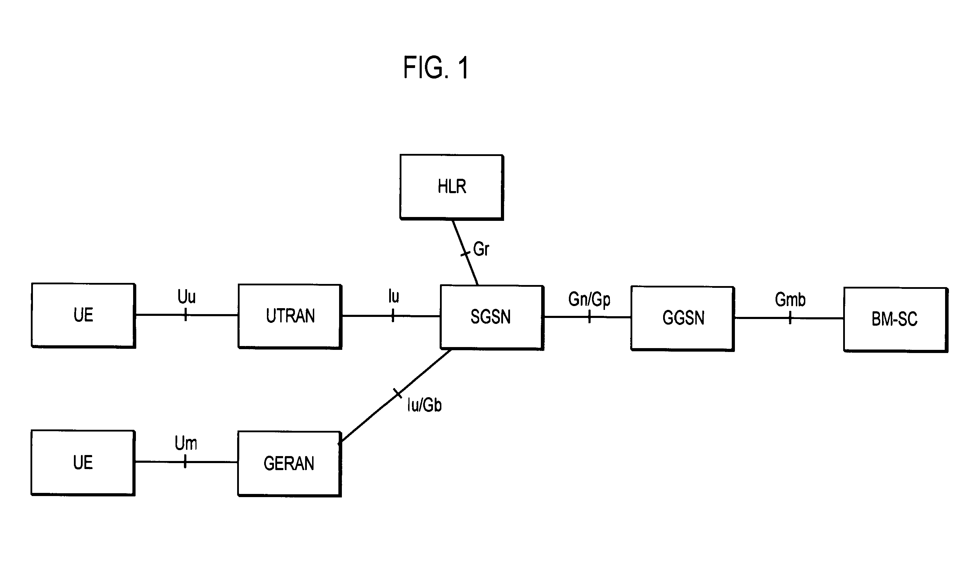

With reference to Figs. 1 to 3, a configuration of a mobile communication system according to a first embodiment of the present invention will be described.

The mobile communication system according to the present embodiment is configured to provide a multimedia content to a plurality of mobile stations UE by a broadcast communication or a multicast communication.

More specifically, the mobile communication system according to the present embodiment is configured to provide a multimedia content to an area by using a plurality of MBMS bearer service, by providing an MBMS to the plurality of the mobile stations UE.

The mobile communication system according to the present embodiment is, as shown in FIG. 1, provided with a Broadcast-Multicast Service Center (BM-SC), a Serving GPRS Support Node (SGSN), a Gateway GPRS Support Node (GGSN), a Home Location Resister (HLR), a UMTS Terrestrial Radio Access Network (UTRAN), and a GSM EDGE Radio Access Network (GERAN).

Since functions of BM-SC, SGSN, GGSN, HLR, UTRAN, and GERAN in the present embodiment are equivalent to those at the time of providing conventional MBMS, a detailed description thereof will be omitted (see, the above-described non-patent literature 1, or the like).

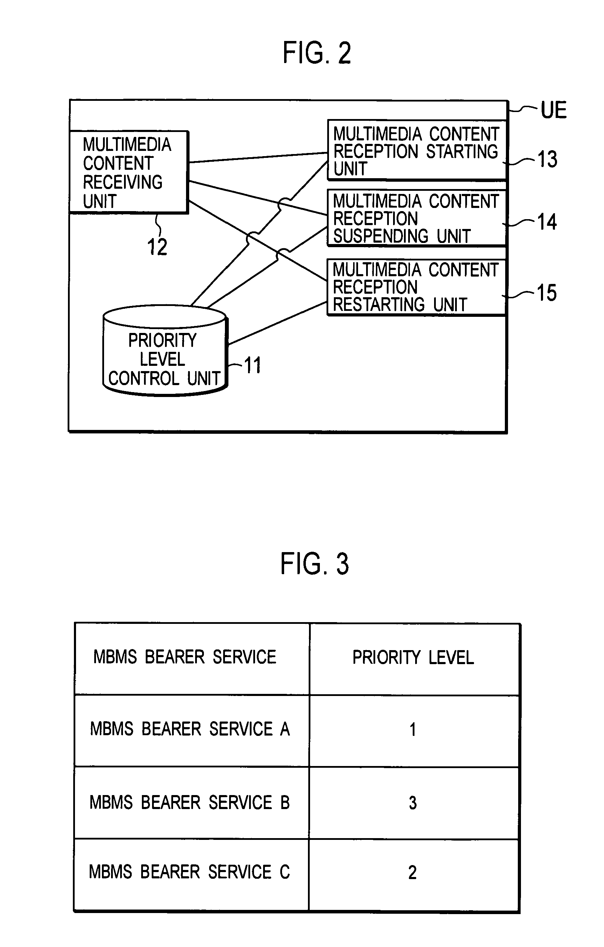

As shown in FIG. 2, the mobile station UE is provided with a priority level control unit 11, a multimedia content receiving unit 12, a multimedia content reception starting unit 13, a multimedia content reception suspending unit 14, and a multimedia content reception restarting unit 15,

The priority level control unit 11 is configured to control a priority level associated with each of a plurality of MBMS bearer services. For example, as shown in FIG. 3, the priority level control unit 11 is configured to control a table which associates "MBMS bearer service name" with "priority level".

The multimedia content receiving unit 12 is configured to receive the multimedia content provided by the broadcast communication or the multicast communication via the UTRAN or the GERAN or the like.

Specifically, the multimedia content receiving unit 12 is configured to start the reception of the multimedia content from the MBMS bearer service, which has received an instruction to start the reception, from the multimedia content reception starting unit 13.

Further, the multimedia content receiving unit 12 is configured to restart the reception of the multimedia content from the MBMS bearer service, which has received an instruction to restart the reception, from the multimedia content reception restarting unit 15.

Further, the multimedia content receiving unit 12 is configured to suspend the reception of the multimedia content from the MBMS bearer service, which has received an instruction to suspend the reception from the multimedia content reception suspending unit 14.

For example, the multimedia content receiving unit 12 is configured to start a reception of a multimedia content from a desired MBMS bearer service, by performing such as a subscription processing, a joining processing, or a radio bearer starting processing (details will be described later).

In addition, the multimedia content receiving unit 12 is configured to suspend or stop the reception of the multimedia content from the desired MBMS bearer service, by performing such as a radio bearer stopping processing or a leaving processing (details will be described later).

The multimedia content reception starting unit 13 is configured to determine, in response to the user's instruction, the reception start of the multimedia content from the desired MBMS bearer service, and to instruct the multimedia content receiving unit 12 to start the reception.

In addition, the multimedia content reception starting unit 13 is configured to start a reception of a multimedia content from a determined MBMS bearer service, which is determined based on the priority level associated with each of the plurality of the MBMS bearer services, when a reception start of the multimedia content from the plurality of the MBMS bearer service makes the number of MBMS bearer services, from which the mobile station receives the multimedia content, to exceed a maximum receivable number or a predetermined number.

Here, the maximum receivable number is determined based on a reception capacity or the like of the mobile station UE. Further, the predetermined number is preliminary set by the mobile station UE or the mobile communication system.

The multimedia content reception suspending unit 14 is configured to determine a reception suspension of the multimedia content from the desired MBMS bearer service, and to instruct the multimedia content receiving unit 12 to suspend the reception, in response to the user's instruction, or when a predetermined condition is satisfied.

In addition, the multimedia content reception suspending unit 14 is configured to determine a reception suspension of a multimedia content from a low priority MBMS bearer service having a lower priority level than the desired MBMS bearer service, when the reception of the multimedia content from the desired MBMS bearer service is to be started while a multimedia content from the maximum receivable number of the MBMS bearer service or a multimedia content from the predetermined number of the MBMS bearer service is being received.

The multimedia content reception restarting unit 15 is configured to determine, when a predetermined condition is satisfied, the reception restart of the multimedia content from the desired MBMS bearer service and to instruct the multimedia content receiving unit 12 to restart the reception.

In addition, the multimedia content reception restarting unit 15 is configured to determine the reception restart of the multimedia content from the suspended low priority MBMS bearer service, after the reception of the multimedia content from the desired MBMS bearer service is completed.

Moreover, the multimedia content reception restarting unit 15 is configured to determine a reception start of a multimedia content from an MBMS bearer service whose reception has not been started, after the reception of the multimedia content from the MBMS bearer service, whose reception start has been determined by the multimedia content reception starting unit 13, is completed.

### (Operations of Mobile Communication System according to the First Embodiment of Present Invention)

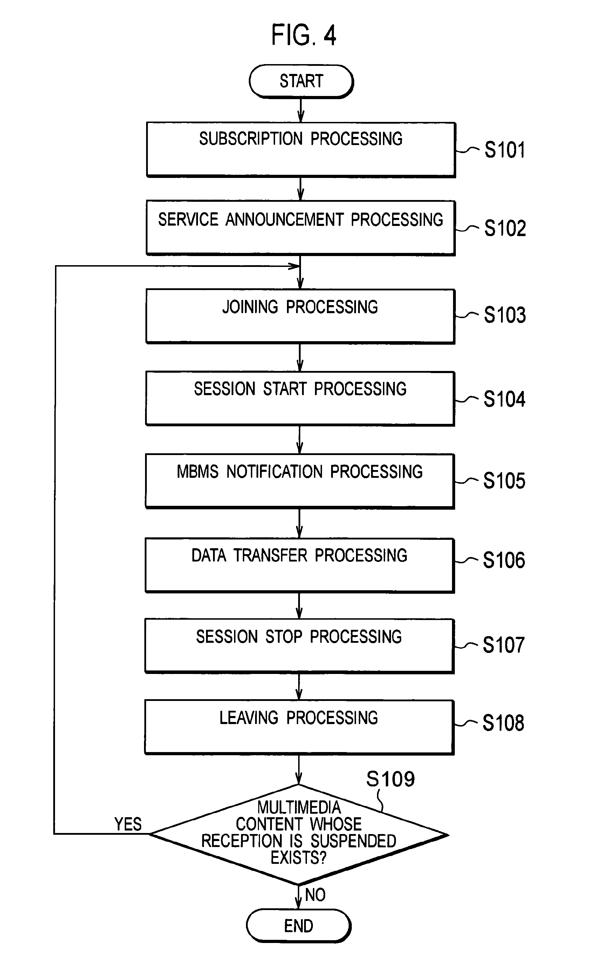

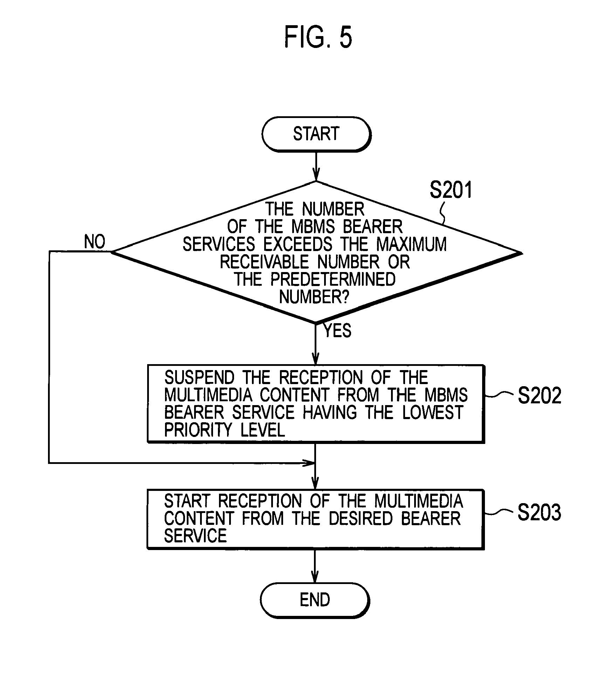

With reference to Figs. 4 and 5, operations of a mobile communication system according to the first embodiment of the present invention will be described.

As shown in FIG. 4, in step S101, a mobile station UE performs a subscription processing to an MBMS, which is being provided by a mobile communication system of the present embodiment. Specifically, by performing the above-described subscription processing, subscription information of the mobile station UE to the MBMS is recorded on a BM-SC.

The mobile station UE can perform a joining processing to a desired MBMS bearer service after the subscription processing to the MBMS is performed, in order to start a reception of a multimedia content from the desired MBMS bearer service. Here, the mobile station UE can perform the subscription processing to the MBMS at a desired timing.

In step S102, the BM-SC performs a service announcement processing for notifying the mobile station UE of an MBMS bearer service which distributes the multimedia content to an area where the mobile station UE is located.

Specifically, in step S102, by a service announcement using an IETF-designated protocol, the BM-SC provides media description information or MBMS session description information to the mobile station UE. Here, the media description information specifies the multimedia content to be distributed In the MBMS bearer service (e.g., video encoding information, audio encoding information or the like) and the MBMS session description information specifies an MBMS session which distributes the multimedia content in the MBMS bearer service (e.g., IP multicast address, transmission time or the like).

In step S103, the mobile station UE performs the joining processing to the desired MBMS bearer service, in order to start the reception of the multimedia content from the desired MBMS bearer service. The joining processing will be described in detail with reference to FIG. 5.

As shown in FIG. 5, in step S201, when the user instructed to start a reception of a multimedia content from at least one desired MBMS bearer service, the multimedia content reception starting unit 13 of the mobile station UE determines whether or not the reception start of the multimedia content from the desired MBMS bearer service makes the number of MBMS bearer services, from which the mobile station receives the multimedia content, to exceed a maximum receivable number or a predetermined number.

When the multimedia content reception starting unit 13 determines that the reception start makes the number of the MBMS bearer services to exceed the maximum receivable number or the predetermined number, the operation proceeds to step S202. Otherwise, the operation proceeds to step S203.

In step S202, by referring to the priority level control unit 11, the multimedia content reception suspending unit 14 of the mobile station UE determines to suspend a reception of a multimedia content from an MBMS bearer service having the lowest priority level, among the multimedia content currently receiving from the MBMS bearer service and the multimedia content from the desired MBMS bearer service.

Then, the multimedia content reception starting unit 13 of the mobile station UE performs a leaving processing from the MBMS bearer service having the lowest priority level in order to suspend the reception of the multimedia content from the MBMS bearer service having the lowest priority level.

In step S203, the multimedia content receiving unit 12 of the mobile station UE determines a reception start of a desired MBMS bearer service whose reception is to be started, in response to instructions from the multimedia content reception starting unit 13 (or the multimedia content reception restarting unit 15) and the multimedia content reception suspending unit 14.

Then, the mobile station UE performs the joining processing to the desired MBMS bearer service whose reception is to be started, in order to start the reception of the multimedia content from the desired MBMS bearer service. Here, the mobile station UE establishes the radio bearer for the desired MBMS bearer service from which the reception is to be started.

Specifically, the mobile station UE transmits "IGMP (IPv4) or MLD (IPv6) Join message" in order to notify that the mobile station UE desires the reception of the multimedia content from the desired MBMS bearer service, which is identified by the IP multicast address.

In step S104, the BM-SC performs a session start processing for establishing a session to distribute the multimedia content in the desired MBMS bearer service.

Specifically, the BM-SC establishes the session to distribute the multimedia content by transmitting a session start request to the GGSN when the distribution of the multimedia content is started in the desired MBMS bearer service.

In step S105, the BM-SC performs the MBMS notification processing for notifying the mobile station UE of information necessary to receive the multimedia content from the desired MBMS bearer service.

Specifically, the base station Node B of the UTRAN firstly transmits an MICH (MBMS Indicator Channel) to the mobile station UE so as to notify that the multimedia content is to be transmitted from the MBMS bearer service. Here, the mobile station ha performed the joining processing to the MBMS bearer service.

Secondly, the mobile station UE receives an MCCH (MBMS Control Channel) so as to obtain information necessary to receive the multimedia content from the desired MBMS bearer service.

In step S106, the BM-SC performs a data transfer processing to the mobile station UE, in order to transfer the desired multimedia content.

Specifically, the mobile station UE receives the desired multimedia content via the radio bearer for the desired MBMS bearer service, In other words, the mobile station UE receives the desired multimedia content distributed in an MTCH (MBMS Traffic Channel), which is identified based on the information notified by the MCCH

In step S107, the BM-SC performs a session stop processing for releasing the above-described session, when the reception of the multimedia content from the desired MBMS bearer service is completed at the multimedia contents receiving unit 12 of the mobile station UE.

In step S108, the mobile station UE performs a leaving processing from the MBMS bearer service in order to stop the reception of the multimedia content from the desired MBMS bearer service. Here, the mobile station UE releases the radio bearer for the desired MBMS bearer service.

In step S109, the multimedia content reception restarting unit 15 of the mobile station UE determines whether or not the multimedia content from the MBMS bearer service whose reception is suspended exists.

When the multimedia content reception restarting unit 15 of the mobile station UE determines that the multimedia content from the MBMS bearer service whose reception is suspended exists, the present operation returns to step S103, and the mobile station UE performs the joining processing to the multimedia content from the MBMS bearer service whose reception is suspended.

On the other hand, when the multimedia content reception restarting unit 15 of the mobile station UE determines that the multimedia content whose reception is suspended does not exists, the present operation is terminated.

In an example of FIG. 3, an MBMS bearer service C has a higher priority level "2" than an MBMS bearer service B whose priority level is "3". Accordingly, when a reception of a multimedia content from the MBMS bearer service C is to be newly started while a multimedia content from an MBMS bearer service A and a multimedia content from the MBMS bearer service B are being received, a mobile station UE is configured to suspend the reception of the multimedia content from the MBMS bearer service B, which is currently being received, and to start the reception of the multimedia content from the MBMS bearer service C. In this example, the maximum receivable number or the predetermined number is "2".

Further, the mobile station UE is configured to restart the reception of the multimedia content from the MBMS bearer service B when the reception of the multimedia content either from the MBMS bearer service A or from the MBMS bearer service C is completed.

Alternatively, when a reception of the multimedia contents from the MBMS bearer service A to C are to be newly started while the multimedia content from the MBMS bearer service is not being received, the mobile station UE is configured to suspend the reception of the multimedia content from the MBMS bearer service B (i.e., to start the reception of the multimedia content from the MBMS bearer service A and C, in other words, to start the reception of the multimedia content other than from the MBMS bearer service B), since the MBMS bearer service B has a lower priority level "3" than the MBMS bearer service A and B, whose priority levels are "1" and "3", respectively.

Further, the mobile station UE is configured to restart the reception of the multimedia content from the MBMS bearer service B when the receptions of the multimedia contents from the MBMS bearer service A to C are completed.

### (Operations and Effects of Mobile Communication System According to the First Embodiment of Present Invention)

The mobile communication system of the present embodiment can solve the following problems; when a reception of a multimedia content from an MBMS bearer service, which exceeds a maximum receivable number or a predetermined number, is newly to be started or simultaneously started at a mobile station while a multimedia content from the predetermined number of the MBMS bearer service is being received, the mobile station cannot receive a multimedia content from an MBMS bearer service having a high priority level, because the mobile station starts receptions of the multimedia content by an order of the arrival at the mobile station, or the mobile station delays in the reception start of the multimedia content from the MBMS bearer service having the high priority level, because a multimedia content from an MBMS bearer service having a low priority level can be received before the multimedia content from the MBMS bearer service having the high priority level is received

### (Modified Example 1)

In the above-described first embodiment, the multimedia content reception suspending unit 14 is configured to determine the reception suspension of the multimedia content from the low priority bearer service, by performing the leaving processing from the low priority bearer service after releasing the radio bearer for the low priority bearer service having the lower priority level than the desired bearer service, when the reception of the multimedia content from the desired bearer service is to be started while the multimedia content from the maximum receivable number of the bearer service or the multimedia content from the predetermined number of the bearer service is being received.

Further, when the reception of the multimedia content from the desired bearer service is completed, the multimedia content reception restarting unit 15 is configured to determine the reception restart of the multimedia content from the suspended low priority bearer service, by establishing the radio bearer for the low priority bearer service after performing the joining processing to the low priority bearer service.

On the other hand, in the modified example 1, the multimedia content reception suspending unit 14 is configured to determine the reception suspension of the multimedia content from the low priority bearer service, without performing the leaving processing from the low priority bearer service after releasing the radio bearer for the low priority bearer service having the lower priority level than the desired bearer service, when the reception of the multimedia content from the desired bearer service is to be started while the multimedia content from the maximum receivable number of the bearer service or the multimedia content from the predetermined number of the bearer service is being received.

Further, in the modified example 1, when the reception of the multimedia content from the desired bearer service is completed, the multimedia content reception restarting unit 15 is configured to determine the reception restart of the multimedia content from the suspended low priority bearer service by establishing the radio bearer for the low priority bearer service, since the joining processing to the low priority bearer service has been performed.

In addition, the multimedia content reception starting unit 13 is configured to only start the reception of the multimedia content from the determined bearer service via the radio bearer, by establishing the radio bearer for the determined bearer service to which the mobile station has performed the joining processing, after performing the joining processing to the determined bearer service in order to receive the multimedia content from the determined bearer service, which is determined based on the priority level associated with each of the plurality of bearer services, when the reception start makes the number of bearer services, from which the mobile station receives the multimedia content, to exceed the maximum receivable number or the predetermined number.

Further, when the reception of the multimedia content from the determined bearer service is completed, the multimedia content reception restarting unit 15 is configured to determine the reception restart of the multimedia content from the bearer service whose reception has not been started, by performing the joining processing to the bearer service whose reception has not been started and by establishing the radio bearer for the bearer service whose reception has not been started, after releasing the radio bearer for the determined bearer service and performing the leaving processing from the determined bearer service.

On the other hand, in the modified example 1, the multimedia content reception starting unit 13 is configured to only start the reception of the multimedia content from the determined bearer service via the radio bearer, by establishing the radio bearer for the determined bearer service, which is determined based on the priority level associated with each of the plurality of bearer services, in order to receive the multimedia content from the determined bearer service, after performing the joining processing to all bearer services, even when the reception start makes the number of the bearer services, from which the mobile station receives the multimedia contents, to exceed the maximum receivable number or the predetermined number.

Further, when the reception of the multimedia content from the determined bearer service is completed, the multimedia content reception restarting unit 15 is configured to determine the reception restart of the multimedia content from the bearer service whose reception has not been started, by establishing the radio bearer for the bearer service whose reception has not been started without performing the leaving processing from the determined bearer service, after releasing the radio bearer for the determined bearer service.

It should be noted that the present invention is not limited to the above-described embodiment, and that various modifications are possible.

### Industrial Applicability

As described above, according to the present invention, it is possible to provide a multimedia content providing method and a mobile station that can solve the above-described problem by effectively controlling the reception of the multimedia content from the MBMS bearer service, based on a priority level associated with each of the MBMS bearer service.

## Claims

1. A multimedia content providing method for providing a multimedia content to a plurality of mobile stations by a broadcast communication or a multicast communication, comprising the steps of:
suspending, at the mobile station, a reception of a multimedia content from a low priority bearer service having a lower priority level than a desired bearer service, when a reception of a multimedia content from the desired bearer service is started while a multimedia content from a maximum receivable number of a bearer service or a multimedia content from a predetermined number of a bearer service is being received; and
restarting, at the mobile station, the suspended reception of the multimedia content from the low priority bearer service, after the reception of the multimedia content from the desired bearer service is completed.

2. The multimedia content providing method according to claim 1, further comprising the steps of:
performing, at the mobile station, a joining processing to the low priority bearer service in order to receive the multimedia content from the low priority bearer service;
establishing, at the mobile station, a radio bearer for the low priority bearer service to which the mobile station has performed the joining processing; and
receiving, at the mobile station, the multimedia content from the low priority bearer service to which the mobile station has performed the joining processing, via the radio bearer; wherein,
in the suspending step of the reception, the mobile station suspends the reception of the multimedia content from the low priority bearer service, by performing a leaving processing from the low priority bearer service after releasing the radio bearer for the low priority bearer service; and
in the restarting step of the reception, the mobile station restarts the suspended reception of the multimedia content from the low priority bearer service, by establishing the radio bearer for the low priority bearer service after performing the joining processing to the low priority bearer service.

3. A multimedia content providing method for providing a multimedia content to a plurality of mobile stations by a broadcast communication or a multicast communication, comprising the steps of:
starting, at the mobile station, only a reception of a multimedia content from a determined bearer service, which is determined based on a priority level associated with each of a plurality of bearer services, when a reception start of a multimedia content from the plurality of the bearer services makes the number of bearer services, from which the mobile station receives the multimedia content, to exceed a maximum receivable number or a predetermined number; and
starting, at the mobile station, a reception of a multimedia content from a bearer service whose reception has not been started, after the reception of the multimedia content from the determined bearer service is completed.

4. The multimedia content providing method according to claim 3, wherein:
in the starting step of only the reception of the multimedia content from the determined bearer service, the mobile station only starts the reception of the multimedia content from the determined bearer service via a radio bearer, by establishing the radio bearer for the determined bearer service to which the mobile station has performed a joining processing, after performing the joining processing to the determined bearer service in order to receive the multimedia content from the determined bearer service; and
in the starting step of the reception of the multimedia content from the bearer service whose reception has not been started, the mobile station starts the reception of the multimedia content from the bearer service whose reception has not been started, by performing the joining processing to the bearer service whose reception has not been started and by establishing the radio bearer for the bearer service whose reception has not been started, after releasing the radio bearer for the determined bearer service and after performing a leaving processing from the determined bearer service.

5. A mobile station for receiving a multimedia content provided by a broadcast communication or a multicast communication, comprising:
a suspending unit configured to determine a reception suspension of a multimedia content from a low priority bearer service having a lower priority level than a desired bearer service, when a reception of a multimedia content from the desired bearer service is started while a multimedia content from a maximum receivable number of a bearer service or a multimedia content from a predetermined number of a bearer service is being received; and
a restarting unit configured to determine a reception restart of the multimedia content from the low priority bearer service, after the reception of the multimedia content from the desired bearer service is completed.

6. The mobile station according to claim 5, further comprising:
a reception unit configured to perform a joining processing to the low priority bearer service in order to receive the multimedia content from the low priority bearer service, to establish a radio bearer for the low priority bearer service to which the mobile station has performed the joining processing, and to receive, via the radio bearer, the multimedia content from the low priority bearer service to which the mobile station has performed the joining processing; wherein,
the suspending unit is configured to determine the reception suspension of the multimedia content from the low priority bearer service by performing a leaving processing from the low priority bearer service after releasing the radio bearer for the low priority bearer service; and
the restarting unit is configured to determine the reception restart of the multimedia content from the low priority bearer service by establishing the radio bearer for the low priority bearer service after performing the joining processing to the low priority bearer service.

7. A mobile station for receiving a multimedia content provided by a broadcast communication or a multicast communication, comprising:
a starting unit configured to determine a reception start of a multimedia content from a determined bearer service, which is determined based on a priority level associated with each of a plurality of bearer services, when a reception start of a multimedia content from the plurality of the bearer services makes the number of bearer services, from which the mobile station receives the multimedia content, to exceed a maximum receivable number or a predetermined number; and
a restarting unit configured to determine a reception start of a multimedia content from a bearer service whose reception has not been started, after the reception of the multimedia content from the determined bearer service is completed.

8. The mobile station according to claim 7, wherein
the starting unit is configured to only start the reception of the multimedia content from the determined bearer service via a radio bearer, by establishing the radio bearer for the determined bearer service after performing a joining processing to the determined bearer service in order to receive the multimedia content from the determined bearer service; and
the restarting unit is configured to determine the reception start of the multimedia content from the bearer service whose reception has not been started, by performing the joining processing to the bearer service whose reception has not been started, and by establishing the radio bearer for the bearer service whose reception has not been started, after releasing the radio bearer for the determined bearer service and performing a leaving processing from the determined bearer service.
